# EUROPEAN PATENT APPLICATION

(11) **EP 2 020 817 A1**
(43) Date of publication of application: **04.02.2009**
(21) Application number: 07015128.7
(22) Date of filing: 01.08.2007
(51) Int. Cl.: H04N 5/782

(54) **Method for selection of a user desired part of a video signal**

(71) Applicant: Sony Corporation, Minato-ku Tokyo 108-0075 (JP)
(72) Inventor: Roth, Daniel, 70327 Stuttgart (DE)
(74) Representative: Müller - Hoffmann & Partner

(57) **Abstract**

Method for selection of a user desired part of a video signal based on user input data, comprising: receiving said video signal, receiving said a data signal, said data signal comprising a content descriptor which is descriptive of a current content of said video signal, determining segments of said video signal based on said content descriptor, wherein a respective boundary of a segment is defined by a change of content, determining said user desired part of said video signal by comparing said user input data and said segments.

## Description

The invention relates to a method for selection of a user desired part of a video signal. Further embodiments of the invention relate to a recording device, television set, and to a system, respectively.

### BACKGROUND

Today, digital recording devices also referred to as set top boxes or the like exist that enable recording of a television program. In order to record a desired program, a user may select a television program together with beginning and end times of the television program. However, the selected television program may not start exactly at the beginning time and/or may not end exactly at the end time. Therefore, it is possible that certain parts of the user selected television program are missing in the recording. Also, it is possible that the recording comprises other television programs that the user did not want to record.

It is an object of the invention, to avoid such problems.

The object is solved by a method, devices and system according to claims 1, 20, 30, and 32, respectively. Further embodiments are defined in the dependent claims. Further details of the invention will become apparent from a consideration of the drawings and ensuing description.

### DESCRIPTION OF THE SEVERAL VIEWS OF THE DRAWINGS

Fig. 1 shows main steps of one embodiment of the invention;
Fig. 2 shows steps according to a further embodiment of the invention;
Fig. 3 shows steps that may be performed when the content name of a user desired part is known;
Fig. 4 shows steps that may be performed when the content name of a user desired part is unknown;
Fig. 5 shows a diagram illustrating the steps of Fig. 4 at hand of an example;
Fig. 6 shows a system comprising a television set and recording device;
Fig. 7 shows a flowchart illustrating timer programming according to the consumer electronics control (CEC) standard.

### DETAILED DESCRIPTION OF THE INVENTION

In the following, embodiments of the invention are described. It is important to note, that all described embodiments in the following may be combined in any way, i.e. there is no limitation that certain described embodiments may not be combined with others.

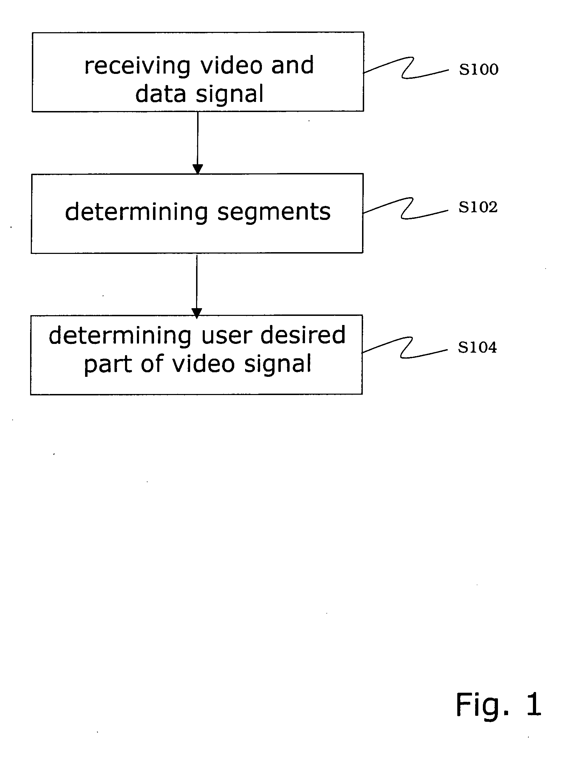

In Fig. 1, in step S 100 a video signal and a data signal are received, said data signal comprising a content descriptor which is descriptive of a current content of said video signal. The content descriptor may e.g. correspond to the title or program name of a currently received television program represented by the video signal. Thus, "content descriptor" may also be referred to as "content name". The video signal may be an analogue or digital television signal received from a broadcast station, server or similar (e.g. IPTV).

In step S102, segments of said video signal are determined based on the content descriptor, wherein a respective boundary of a segment is defined by a change of content. Thus, a segment may comprise a television program or a part thereof.

In step S104, a user desired part of said video signal is determined by comparing user input data and said segments. The user input data may correspond to data indicating a television program, e.g. by indicating the name or title, the user wants to record. The user input data may also comprise timing information, e.g. the beginning and/or end times of the user desired part, i.e. the part of the video signal that the user wants to record. In other words, "user desired part" may be a movie, news broadcast or any other television program/show the user wants to record or watch. A user desired part may e.g. be an episode of the television show such as e.g. "Desperate Housewifes".

In an embodiment, the user input data may comprise a selection content descriptor that is descriptive of the content of said user desired part, and said desired part may be determined by matching said selection content descriptor and said content descriptor. In other words, the selection content descriptor and the content descriptor may be compared, and, if the two descriptors are equal to each other, then it is determined that the corresponding segment corresponds to the user desired part. Based on the user desired part, it may e.g. be possible to remove segments corresponding to television programs other than the television program the user wants to record. Thus, memory on a recording media may be saved.

In a further embodiment, the user input data may comprise a beginning time and an end time of said user desired part, wherein a part length of the user desired part is defined. If no match between the selection content descriptor and the content descriptor occurs, a length difference may be determined for each segment by subtracting the part length from a respective segment length and the user desired part is chosen to be equal to the segment having the smallest length difference of all segments.

In a further embodiment, the user input data may comprise a beginning time and/or an end time of said user desired part thereby defining a part length of said user desired part. The user desired part may be determined based on a comparison of a length of a respective segment with said part length.

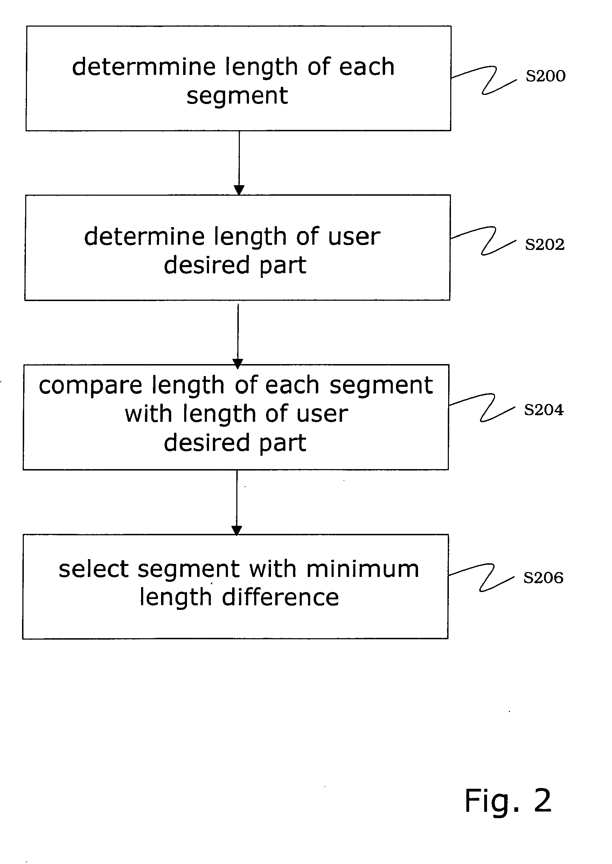

Respective steps are shown in Fig. 2, wherein in step S200, the length of each segment is determined, and in step S202 the length of the user desired part is determined.

In step S204, the length of each segment is compared with the length of the user desired part. Finally, in step S206, the segment with the minimum length difference is selected as user desired part.

The length difference may be determined for each segment by subtracting the part length from a respective segment length and said user desired part may be chosen to be equal to the segment having the smallest length difference of all segments (step S206).

Because the user has selected a certain television program having a certain length, i.e. part length, one of the segments that is e.g. recorded, should have a length roughly corresponding to the part length. This is the reason why the user desired part may be determined by comparing the lengths as described above.

The content descriptor of the data signal may be recorded together with the video signal. Thus, in one embodiment, it may be possible, that all of the above explained steps be performed based on a recorded version of a video and data signal, e.g. offline or without a connection to a video source. Thus, the user desired part may be determined or spotted within a recorded part of the video signal.

In a further embodiment, if no change of content occurred in the vicinity of the end time, the recording may be continued until a change of content occurs. "In the vicinity" may e.g. mean within a time interval surrounding the end time. The time interval may be determined heuristically or depending on the part length. Thus, according to this embodiment, recording may continue even until after the end time. The recording may continue until a change of content occurs after the end time. Thus, it may be possible that even if the program the user wants to record lasts longer than the end time, it will be recorded entirely. E.g. all of a movie or television show a user wants to record may, thus, be recorded and no parts may be cut off.

If the recording continues as described, it may be that a new programmed timer overlaps with the continued recording. In other words, it may be possible that the user wanted to record two different movies, wherein the first movie should e.g. according to EPG information, stop before the second movie starts. However, because the first movie started late e.g. due to a live event before it now overlaps with the second movie. In order to handle such situations, it is possible to allow the user to set recording priorities. Thus, when programming the recording timer, the user may set priorities for each recording such that it is ensured that a particular movie or television show is recorded for sure. Of course, if the priority of the second movie is higher, than recording of the first movie may be interrupted in favor of recording the second movie.

In a further embodiment, the method may comprise determining an additional recording time corresponding to a predetermined percentage of said part length, and determining a recording time based on said beginning time, end time and additional recording time. The recording time may start at the beginning time minus the additional recording time. Thus, recording may start before the beginning time. For example, if the user extracts the beginning time from electronic program guide (EPG) information, the beginning time may be 21:00 hrs. However, recording may start at 20:50 hrs.

According to a further embodiment, a further additional recording time may be determined corresponding to a further predetermined percentage of the part length, and said recording time may end at the end time plus the further additional recording time. For example, if the end time extracted from EPG information is at 23:00 hrs, then the recording time may end at 23:15 hrs (in this case the further additional recording time would be equal to 15 minutes).

According to further embodiment of the invention, segments of the recorded part other than the segment corresponding to the user desired part may be deleted from a recording media. As mentioned above, the recorded part may comprise a larger part than one television program e.g. movie and, thus, may comprise a plurality of segments. These segments, however, may be removed automatically or depending on a user query in order to save space on e.g. a hard disk used for recording. For example, if the user desired part corresponds to an episode of "Desperate Housewives", then the recorded part may comprise a first segment belonging to a previous television program of e.g. a talk show, a second segment corresponding to the entire episode of Desperate Housewives, the user wants to record, and a third segment of a following television program of e.g. News. In this case, the first and third segments may be deleted automatically from the recording media. Alternatively, the first and third segments may only be deleted after the user has given his/her consent to do so.

In a further embodiment, the video signal may be an analogue video signal or a digital video signal of a standard selected from the group of standards consisting of digital video broadcasting terrestrial (DVB-T) e.g. based on MPEG 2 or MPEG 4, digital video broadcasting cable (DVB-C), digital video broadcasting satellite (DVB-S), and internet television standard (IP-TV).

In a further embodiment, the data signal may comprise SI-data, said SI-data comprising said content descriptor, i.e. the content name.

A recording device according to an embodiment of the invention may comprise a first receiver configured to receive user input data, a second receiver configured to receive a video and data signal, said data signal comprising a content descriptor which is descriptive of a current content of the video signal, a storage configured to store at least one continuous part of said video and/or data signal, a mode register configured to store a recording mode, and a data processor, wherein, if said recording mode corresponds to a smart recording mode, segments of said video signal are determined based on said content descriptor, wherein a respective boundary of a segment is defined by a change of content, and a user desired part of said video signal is determined by comparing said user input data and said segments.

Thus, the recording device may e.g. be configured to execute the above method of selection of a user desired part.

In a further embodiment, the first receiver may operate according to the high definition multimedia interface (HDMI) standard, and the user input data may be transmitted to the recording device according to the consumer electronics control (CEC) standard. Alternatively, AV Link standard may be used.

Thus, in a further embodiment, it may be possible that the user input data comprises the recording mode. Therefore, a new or expanded existing CEC command may be used which is currently not incorporated in the latest version of the CEC standard as described in "High-Definition Multimedia Interface", Specification Version 1.3a of November 10, 2006.

The new or expanded CEC command may be e.g. an additional byte value ("a flag") in a set timer command or an independent new command, which separately transmits recording mode and optional priority information.

According to a further embodiment of the invention, a television set may comprise an electronic program guide mechanism configured to allow selection of a program item, a mode setting mechanism configured to allow the user to set a recording mode, a data processor configured to determine user input information based on said program item and said recording mode, and a sending mechanism configured to send said user input information to a recording device.

A further embodiment of the invention concerns a system comprising a television set as explained above, and a recording device as explained above.

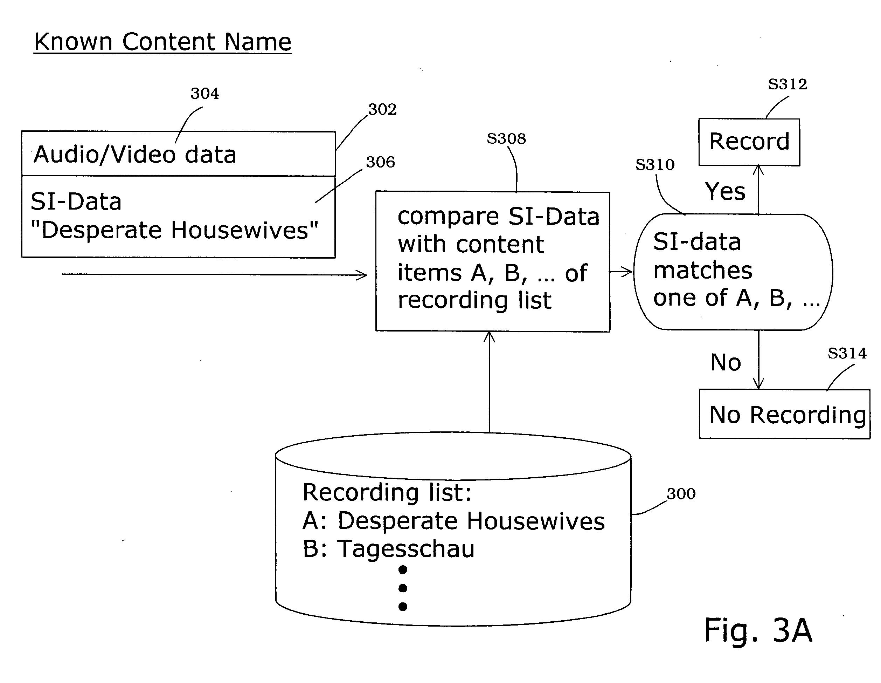

Fig. 3A shows an embodiment of the invention where the content name (also referred to as "selection content descriptor") of a user desired part is known, i.e. e.g. the movie title or name of television show the user wants to record is known. Thus, the content name may e.g. be "Desperate Housewifes". In the example of Fig. 3A, the user has created a recording list 300 stored in a database. The recording list 300 may e.g. be created by selecting program items from an electronic program guide or similar service offered by a television set or set top box, e.g. recording device. As seen, recording list 300 comprises two items A: Desperate Housewives and B: Tagesschau.

In order to record an item of the recording list, in the example of Fig. 3A, e.g. content item A Desperate Housewives, the system receives a signal 302. Signal 302 comprises audio/video data 304 and SI-data 306. The SI-data 306 comprise a content descriptor, which in the example of Fig. 3A corresponds to the title of the currently received content of said video signal, i.e. "Desperate Housewives".

In a comparing step S308, the content descriptor of the SI-data 306 is compared with content items A, B, ... of recording list 300. As seen in step S310, if the SI-data matches one of A, B, ..., then video signal 302 is recorded in step S312. If, in step S310, the content descriptor of SI-data 306 does not match one of A, B, ..., then, according to step S314, no recording takes place.

Steps S308 and S310 may be performed in stand-by modus or other appropriate power mode, e.g. semi-standby mode, of a television set or set top box, i.e. it may not be necessary, that e.g. a hard disk is powered on. Therefore, steps S308 and S310 may be performed within a preprocessing block or the like constantly receiving and observing SI-data 306. If SI-data 306 match with one of A, B, ..., of recording list 300, then the preprocessing unit may power on the whole system, e.g. the television set and/or set top box. By performing steps S308 and S310 in a preprocessing block, it may be possible to save energy because a hard disk may not need to be powered on all the time.

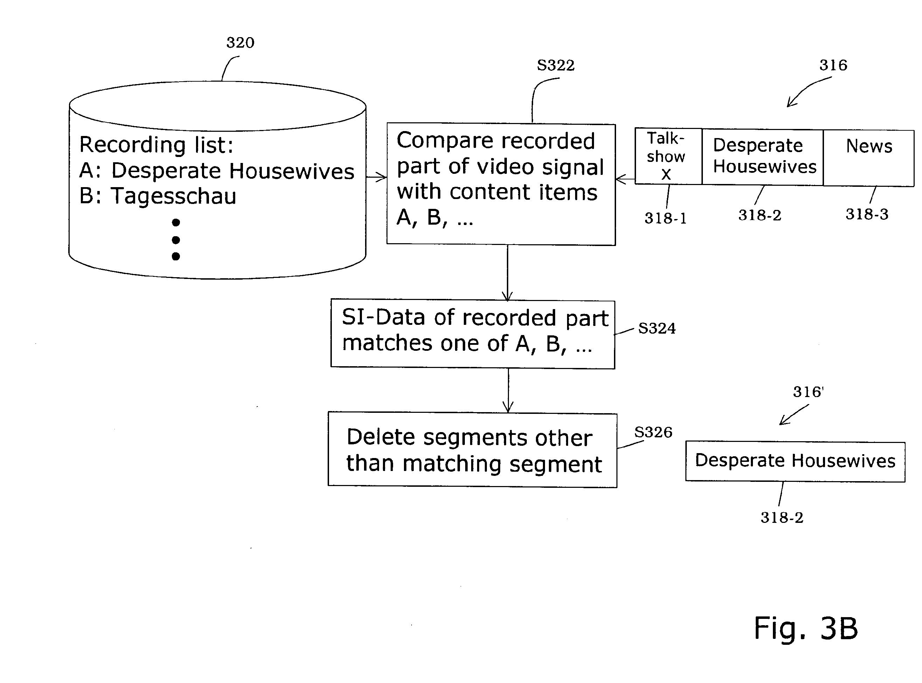

Fig. 3B shows another example where the content name ("selection content descriptor") of a user desired part e.g. a content item of recording list 320 is known. In the example of Fig. 3B, a recorded part 316 of a video signal and/or data signal is stored on e.g. a hard disk of a recording device. The recorded part 316 comprises segments 318-1, 318-2, and 318-3. Segment 318-1 may correspond to recorded video data of a talk show X, segment 318-2 corresponds to video data of an episode of Desperate Housewives and segment 318-3 corresponds to video data of News.

In step S322, the recorded part 316 of the video signal is compared with content items A, B, ..., of recording list 320.

Recorded part 316 also comprises the SI-data or at least the content name/content descriptor derived from SI data or other data received via e.g. the internet, which have been stored together with the respective segments 318-1, 318-2, 318-3. Thus, if in step S324 it is determined that the content descriptor of the recorded SI-data matches one of A, B, ..., then in step S326, segments other than the matching segments may be deleted. In the example of Fig. 3B, recording list 320 comprises content item A: Desperate Housewives. This content item matches with the content descriptor of the SI-data of segment 318-2. Therefore, the other segments of recorded part 316, i.e. segments 318-1 and segment 318-3 may be deleted. The result is that recorded part 316' now only comprises the segment 318-2 corresponding to the episode of Desperate Housewives. When selecting segment 316' for viewing, the user can therefore directly start enjoying what he wanted to record.

Before deleting the segments, the user may be asked to confirm deletion. Alternatively, the deleting may be performed automatically.

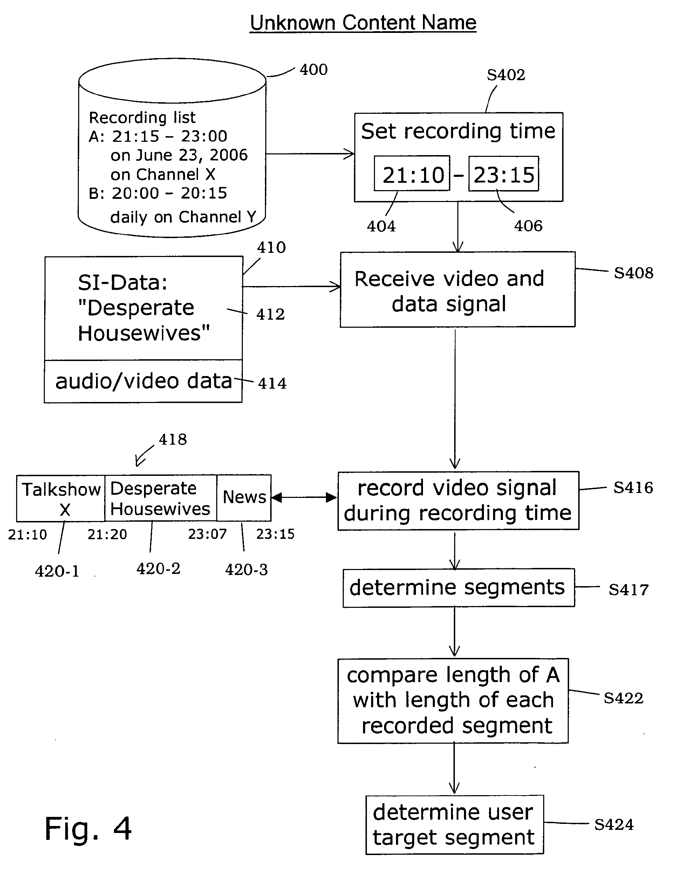

Fig. 4 shows an example, where the content name of a user desired part is unknown.

If the content name is unknown, recording list 400 may comprise items A, B, wherein for each item a recording time is indicated. In the example of Fig. 4, recording list 400 comprises an item A indicating that the user wants to record a certain television program of a channel X on June 23, 2006 from 21:15 hrs to 23:00 hrs. In order to assure that all of the desired part corresponding to content item A of recording list 400 is recorded, in step S402, a recording time is set. The recording time is determined to be longer than the duration of the recording according to the recording list 400. Therefore, recording may start before the indicated beginning time of item A (21:15 hrs.) and may end after the end time (23:00 hrs.) of content item A. In the example of Fig. 4, the beginning time 404 of the recording time is set to 21:10 hrs and the end time 406 is set to 23:15 hrs. The beginning and end times may e.g. be determined by subtracting/ adding a predefined percentage of the recording time according to recording list 400. Alternatively, it may also be possible to use default or set values, e.g. "start 15 minutes before the beginning time according to the recording list" and "end 15 minutes after the end time according to the recording list 400". The user may set the default values.

In step S408, a video and data signal 410 is received. Video and data signal 410 comprises audio/video data 414 and a content descriptor derived from SI-data 412. Alternatively or additionally, the content descriptor may also be received from another source, e.g. via the internet. In the example, the content descriptor corresponds to the title of the television show "Desperate Housewives".

Then, in step S416, the video signal 410 is recorded during the recording time determined in step S402.

After the recording has finished or during recording, segments are determined in step S417. Optionally the segments could be automatically labeled with the content descriptor and other available information ("meta data") derived from any available source (e.g. name, recording time, plot, ... derived from SI data, teletext, internet, ...).

In step S416, a recorded part 418 of the video signal may have been recorded. The recorded part 418 may comprise three segments, e.g. a first segment 420-1 corresponding to a talk show X, a second segment 420-2 corresponding to an episode of Desperate Housewives, and a third segment 420-3 corresponding to News. Recorded part 418 has been recorded from 21:10 hrs to 23:15 hrs in accordance with recording time set in step S402.

In step S417, the segments are determined based on the content descriptor of SI-data 412 or the content descriptor derived from another source, wherein a segment boundary is defined by a change of content. Thus, the SI-data may be used in order to determine the segment boundaries. In the example the first segment 420-1 was recorded from 21:10 hrs. to 21:20 hrs., second segment 420-2 was recorded from 21:20 hrs. to 23:07 hrs. and third segment 420-3 was recorded from 23:07 hrs. to 23:15 hrs.

The recording and segmenting of steps S416 and S417, respectively, may also be done in parallel, i.e. the segments may be determined at the same time as recording takes place.

In order to find out which of segments 420-1, 420-2, 402-3 correspond to content item A of recording list 400 that the user wants to record, the length of content item A according to recording list 400 is compared with the length of each recorded segment in step S422.

Then, in step S424, the user target segment is determined. The user target segment is the segment that corresponds to content item A of recording list 400.

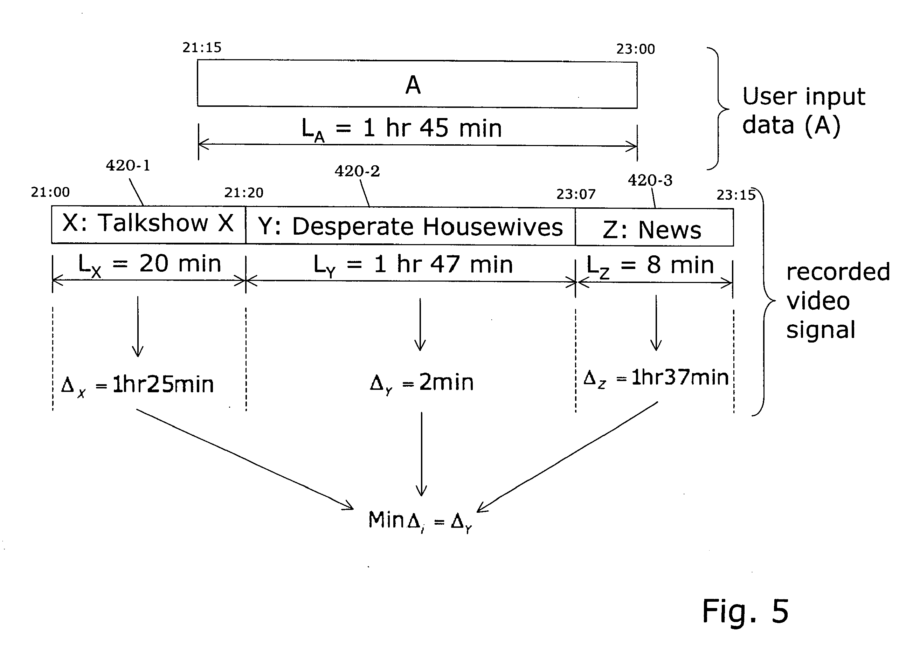

The comparing step S422 will now be explained at hand of Fig. 5.

As is apparent from the above example, the user wants to record a content item A from 21:15 hrs. to 23:00 hrs. This corresponds to a part length of 1 hr 45 min. The information stored for content item A, may also be referred to as user input data since it is data the user has inputted.

Each of segments 420-1, 420-2 and 420-3 have a certain length L. Segment 420-1, also referred to as segment X has a length L_{X} = 20 min., segment 420-2, also referred to as segment Y, has a length L_{Y} = 1 hrs. 47 min. and segment 420-3, also referred to as segment Z, has a length L_{Z} = 8 min.

For each of segments 420-1, 420-2, 420-3, a time difference between the length of the respective segment and the length L_{A} of content item A according to recording list 400 is determined. The time difference between L_{A} and L_{X} is equal to |Δ_{X}| = 1 hrs. 25 min. The time difference between L_{A} and L_{Y} is equal to |Δ_{Y}| = 2 min. and the time difference between L_{A} and L_{Z} is equal to |Δ_{Z}| = 1 hrs. 37 min.

In order to determine the user target segment in step S424, the minimum of all time differences Minᵢ |Δᵢ| is determined. In the example of Figs. 4 and 5, the segment with the minimum time difference is segment Y. Thus, Minᵢ |Δᵢ| = Δ_{Y}.

In other words, as seen in Fig. 5, the length of segment 420-2 corresponds roughly to the length L_{A} of the length of content item A according to recording list 400.

Thus, it is assumed that the user wanted to record segment 420-2 corresponding to the episode of Desperate Housewives.

As mentioned above, segments 420-1 and 420-3 may be deleted from e.g. a hard disk in order to save space and/or not bother the user when selecting the recorded part 418 for playback.

It should be noted that the scenario where the content name is not known, i.e. the title of the program the user wants to record is not known, may be used as a fallback to the scenario where the title is known. In other words, if the title is wrong e.g. due to a typo of the user or has been changed e.g. by the broadcast station, i.e. the content descriptor of the SI-data does not match with what is contained in the recording list (A, B, ... in Figs. 3 and 4), then it is still possible to allow for "smart recording". This is possible because the embodiment as described in connection with Figs. 4 and 5 functions only by comparing the length of the recorded segments with the length of the programmed item. Note, that although the SI-data may not comprise content descriptors matching with the content of the recording list, the SI-data still contain content descriptors which ensures that the segment boundaries may be determined. Of course, it may be possible to generate the segment boundaries differently, e.g. based on timing information received from an external server.

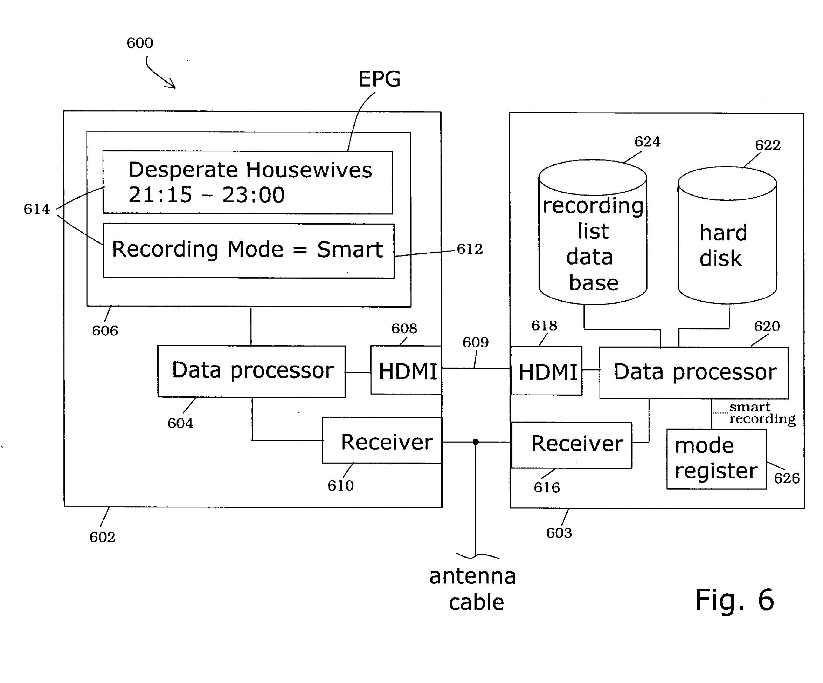

Fig. 6 shows a system 600 comprising a television set 602 and recording device 603.

Television set 602 comprises a data processor 604, display 606, electronic program guide EPG, HDMI interface 608, receiver 610 and mode setting mechanism 612.

Receiver 610 is configured to receive e.g. an analogue and/or digital television signal received via an antenna cable. Data processor 604 may decode the received video signal and extract electronic program guide EPG information. In the example shown in Fig. 6, electronic program guide information may allow the user to select a content item corresponding to an episode of "Desperate Housewives" broadcasted from 21:15 hrs. to 23:00 hrs. The user may select this Desperate Housewives episode for recording. Further, using said mode setting mechanism 612, the user may select as recording mode "smart recording". "Smart recording" means that the system shall operate such that only the desired episode of Desperate Housewives is recorded or that a larger part is recorded and the episode of Desperate Housewives is later cut out of the recorded part of the video signal as explained above at hand of Figs. 3A, 3B and 4, 5, respectively. There might be different smart modes selectable.

The selection of the episode of Desperate Housewives together with the respective recording times and the set recording mode correspond to user input data 614. Data processor 604 then operates to transmit the user input data 614 via HDMI interface 608 to recording device 608. Instead of HDMI, it is also possible to use an AV Link or other communication protocols, e.g. Ethernet, to transmit user input data to the recording device.

Recording device 603 comprises a receiver 616, HDMI interface 618, data processor 620, hard disk 622, recording list data base 624 and mode register 626.

In one possible embodiment, television set 602 may transmit said user input data 614 via said HDMI interface 608 to HDMI interface 618 in the consumer electronics control (CEC) standard. Therefore the CEC standard may be extended by including an additional byte value indicating the recording mode. Thus, via HDMI link 609 between HDMI interface 608 and HDMI interface 618, all of the user input data 614 (comprising the recording information extracted from EPG and the set recording mode) may be transmitted from television set 602 to recording device 603.

Data processor 620 of recording device 603 is then operated to store the recording mode 612 set by the user in mode register 626. Further data processor 620 is operated to store a video signal and optional meta data received by receiver 616 on said hard disk 622. The recording time may be determined as explained above, i.e. recording may start before the beginning time according to the electronic program guide information and recording may end after the end time as indicated by the electronic program guide information.

After recording has been finished or during the recording, if said mode register 626 indicates "smart recording mode", then segments of the recorded part of the video signal are determined as explained above, and the length of each segment is compared with the length according to the electronic program guide information, which has been stored in recording list database 624.

As explained above, only one segment may be retained, i.e. the segment having the smallest difference in length Δ between the length which was transmitted to the recording device and the length of the respective segment.

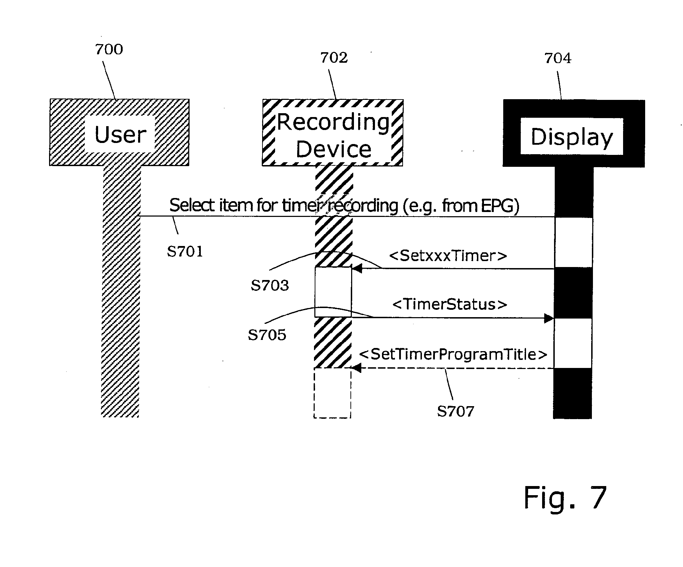

Fig. 7 shows an example of a CEC timer programming. The diagram of Fig. 7 shows the different entities involved in programming the timer according to the CEC standard. In a first step S701, user 700 selects an item e.g. from an EPG for timer recording. Thus, in step S701 e.g. the episode of Desperate Housewives may be selected as explained above at hand of Fig. 6. The selection may be done on a display 704 of the television set using some kind of graphical user interface. After having received this information in step S701, display 704 or a data processor of the television set sends a command <Set xxxx Timer> to a recording device 702 in step S703. <Set xxxx Timer> may correspond to a command selected from the group of commands comprising <Set Analogue Timer>, <Set Digital Timer > or <Set External Timer>.

After having received the <Set xxxx Timer> command, recording device 702 evaluates whether it can handle a corresponding recording. Reasons why recording device 702 may not be able to handle a recording are e.g. if there is not sufficient space left on the recording media e.g. hard disk, or because there is a collision with other already programmed timers. Based on the evaluation, recording device 702 sends back to display 704 a <TimerStatus> to display 704. If e.g. recording device 702 has enough space on its hard disk and no other programs are scheduled to be recorded during the recording time of the <Set xxxx Timer> command, the <TimerStatus> command may indicate "ok".

After having received the information "ok" from the recording device 702, display 704 may send a <SetTimerProgramTitle> command to recording device 702 in step S707. Thereby, the title of the selected item may be transmitted to recording device 702 according to the CEC standard.

In order for the recording device 702 to know if recording should be done in smart mode, said <Set xxxx Timer> command may comprise an additional byte value indicating the recording "smart mode". Alternatively or additionally, the <Set-TimerProgramTitle> command may comprise an additional byte value indicating that recording should be done in a smart mode. It may also be possible to provide a new command to be transmitted between display 704 and recording device 702 that only comprises data indicating whether recording should be done in a smart mode or in default mode.

The following elucidations may help a person skilled in the art to get a better understanding of the invention:
It may be possible to provide timer recording programming that handles broadcast delays automatically and records the intended broadcast without unwanted material at the beginning and without an incomplete end. The timer may be programmed using date, time and duration or start date/time and end date/time of the recording and optionally the name of the content, e.g. extracted from EPG. This programming information may be derived from user input to menus of the recording device or be transmitted programming information, e.g. by CEC (consumer electronics control). The source of this programming information could be menu entries or EPG data of a connected device.

The recording device may then record only the content which fits to the content name (also referred to as content description) derived from SI-data or similar content description.

In other words, it may be possible to modify the normal timer programming in a way that the user (or a connected device which the user uses as programming interface) can select which kind of recording mode should be used for the recording: a mode that records a specific time frame only, e.g. exactly from 20:10 h to 20:15 h or a further mode ("smart mode") that records a specific broadcast, e.g. movie, which will be recorded, wherein a shifted beginning or a shifted end is taken into account while recording. In the further mode it is, thus, possible to ensure a recording of a specific broadcast (movie or the like) even though the specific broadcast lasts longer than expected. Thus, a method may be provided to find out if the recorded content fits to the content the user wants to record.

Smart recording with known content:
If the name of the content to be recorded is known, e.g. extracted from EPG data, the recording device may check the SI-data, a certain amount of time before the scheduled recording. As soon as the program descriptor fits to the EPG data, it starts recording and it stops recording if it changes again.

Smart recording with unknown content name:
If the content name is not known, the recording device may start recording a certain amount of time before the scheduled recording and create chapter marks (segment boundaries) according to the content name description of e.g. SI-data. It then may compare the length of the chapter with the recording duration of the timer programming data to find out which content is most likely wanted. It can automatically delete the unwanted chapters or ask the user for interaction.

This mode may also be used as a fallback, if the content name from timer programming does not fit to the content name at the scheduled recording at all.

Possible new CEC solution:
If the recording timer is programmed by another device, e.g. using CEC (consumer electronics control) new or expanded CEC commands are necessary, since CEC1.3a does not allow to select different recording modes (see specification version 1.3a of High Definition Intermedia Interface published on November 10, 2006 by Hitachi, Ltd., Matsushita Electric Industrial Co., Ltd. Philips Consumer Electronics, International B.V. Silicon Image, Inc., SONY Corporation, Thompson Inc., and Toshiba Corporation).

The additional information about recording mode could be transmitted with an expanded <Set xxxx TimerCEC> command that will need to be newly defined in the CEC specification. xxxx stands for all kinds of timers or for an additional CEC specific command. There could be an additional byte value, which specifies the recording mode. There could be different modes:
- only a specific time frame, e.g. exactly from 20: 10 h to 20:15 h, is recorded;
- only the wanted movie is recorded using VPS information;
- only the wanted movie is recorded using a smart mode comparing the name of the current content derived from digital SI data (service information), teletext or any other source;
- a larger time frame is recorded which is automatically segmented into chapters every time the content name (derived from digital SI data (service information), teletext or any other source) changes.

Priorities:
If there is a timer overlap because the current timer recording takes longer than expected at programming time, priorities given by the user may control if the current recording will be finished or the next recording will start. For CEC there could be an additional byte value which specifies the recording priority.

Thus, the user may select to use a special smart recording mode or not (default mode). Smart recording modes allow to record content even if the broadcast is delayed, e.g. due to a change of schedule, or if the content is longer than expected, e.g. due to a live event.

The user may use these features using CEC timer recording programming. Further, an optional fallback mode is provided in case the recording name was not correct. Still further, optional priorities may be used to decide which program to record in case of overlaps caused by broadcast delays.

The concept of using priorities may be best understood at hand of an example: For example, the user may want to record a first movie on television channel "ARD" from 20:00 h to 22:00 h. Also, the user programmed the recording device to record another movie on television channel "Pro7" from 22:00 h to 23:00 h. If the movie on ARD lasts longer than 22:00 h, then a conflict arises between the recording on ARD and Pro7. Therefore, e.g. when programming the recording, the user may set priorities. For example, the user may set a higher priority for the movie on ARD, such that the recording of the movie on ARD does not stop in favour of recording the movie on Pro7. Of course, if the priority for the movie on Pro7 is higher than the priority for the movie on ARD, then the recording of the movie on ARD will stop in favour of recording the movie on Pro7.

In a further embodiment of the invention, the CEC standard may be extended such that it is possible to signal within analogue systems that VPS should be used. Thus, in the HDMI standard, a byte value may be defined for activating VPS. Also, in analogue systems that are using AV link, the AV link standard may be extended to also enable signalling the above explained modes such as e.g. smart mode.

## Claims

1. Method for selection of a user desired part of a video signal based on user input data, comprising:
receiving said video signal,
receiving a data signal comprising a content descriptor which is descriptive of a current content of said video signal,
determining segments of said video signal based on said content descriptor, wherein a respective boundary of a segment is defined by a change of content,
determining said user desired part of said video signal by comparing said user input data and said segments.

2. Method according to claim 1, wherein said user input data comprises a selection content descriptor that is descriptive of the content of said user desired part, and said user desired part is determined by matching said selection content descriptor and said content descriptor.

3. Method according to claim 2, wherein said user input data comprise a beginning time and an end time of said user desired part thereby defining a part length of said user desired part, and wherein, if no match between said selection content descriptor and said content descriptor occurs, a length difference is determined for each segment by subtracting said part length from a respective segment length and said user desired part is chosen to be equal to the segment having the smallest length difference of all segments.

4. Method according to claim 1 or 2, wherein said user input data comprise a beginning time and an end time of said user desired part thereby defining a part length of said user desired part, and wherein said user desired part is determined based on a comparison of a length of a respective segment with said part length.

5. Method according to claim 4, wherein a length difference is determined for each segment by subtracting said part length from a respective segment length and said user desired part is chosen to be equal to the segment having the smallest length difference of all segments.

6. Method according to claims 4 or 5, wherein, if no change of content occurred in the vicinity of said end time, a recording of said video signal is continued until a change of content occurs.

7. Method according to any of claims 4 to 6, comprising
determining an additional recording time corresponding to a predetermined percentage of said part length, and
determining a recording time based on said beginning time, end time and additional recording time.

8. Method according to claim 7, wherein said recording time starts at said beginning time minus said additional recording time.

9. Method according to claim 7 or 8, wherein a further additional recording time is determined corresponding to a further predetermined percentage of said part length, and said recording time ends at said end time plus said further additional recording time.

10. Method according to any of claims 6 to 9, wherein said user input data comprise a first priority associated with a first user desired part and a second priority associated with a second user desired part following after said first user desired part within said video signal, wherein if said first priority is higher than said second priority, the recording of said first user desired part is not interrupted in favor of recording said second user desired part.

11. Method according to claim 10, wherein if said second priority is higher than said first priority, a recording of said first user desired part is interrupted in favor of recording said second user desired part.

12. Method according to any of claims 6 to 11, wherein segments of the recorded part other than the segment corresponding to the user desired part are deleted from a recording media.

13. Method according to any of claims 1 to 12, wherein said video signal is an analogue video signal or a digital video signal of a standard selected from the group of standards consisting of digital video broadcasting terrestrial (DVB-T), digital video broadcasting cable (DVB-C), digital video broadcasting satellite (DVB-S), and internet television standard (IP-TV).

14. Method according to any of claims 1 to 13, wherein said data signal comprises SI-data, said SI-data comprising said content descriptor.

15. Method according to any of claims 1 to 14, wherein said video signal and said data signal are received via a same transmission channel.

16. Method according to claim 15, wherein said same transmission channel is an analogue television channel, and said data signal is transmitted in the vertical blank period of a corresponding television signal.

17. Method according to claim 15, wherein the video signal and the data signal are part of a corresponding video stream, and data stream, respectively, of a digital video broadcasting signal.

18. Method according to any of claims 1 to 14, wherein said video signal and said data signal are received via different channels.

19. Method according to claim 18, wherein said data signal is received via an internet connection from a respective server.

20. Recording device, comprising:
a first receiver configured to receive user input data;
a second receiver configured to receive a video signal and a data signal, said data signal comprising a content descriptor which is descriptive of a current content of said video signal;
a storage configured to store at least one continuous part of said video signal;
a mode register configured to store a recording mode; and
a data processor, wherein, if said recording mode corresponds to a smart recording mode, segments of said video signal are determined based on said content descriptor, wherein a respective boundary of a segment is defined by a change of content, and a user desired part of said video signal is determined by comparing said user input data and said segments.

21. Recording device according to claim 20, wherein said user input data comprises a selection content descriptor that is descriptive of the content of said user desired part, and said user desired part is determined by matching said selection content descriptor and said content descriptor.

22. Recording device according to claim 20 or 21, wherein said user input data comprise a beginning time and an end time of said user desired part thereby defining a part length of said user desired part, and wherein said user desired part is determined based on a comparison of a length of a respective segment with said part length.

23. Recording device according to claim 22, wherein a length difference is determined for each segment by subtracting said part length from a respective segment length and said user desired part is chosen to be equal to the segment having the smallest length difference of all segments.

24. Recording device according to claim 22 or 23, wherein, if no change of content occurred in the vicinity of said end time, a recording of said video signal is continued until a change of content occurs.

25. Recording device according to claim 24, wherein said user input data comprise a first priority associated with a first user desired part and a second priority associated with a second user desired part following after said first user desired part within said video signal, wherein if said first priority is higher than said second priority, the recording of said first user desired part is not interrupted in favor of recording said second user desired part.

26. Recording device according to claim 25, wherein if said second priority is higher than said first priority, a recording of said first user desired part is interrupted in favor of recording said second user desired part.

27. Recording device according to any of claims 20 to 26, wherein said first receiver operates according to the high definition multimedia interface (HDMI) standard and said user input data are transmitted to said recording device according to the consumer electronics control (CEC) standard.

28. Recording device according to any of claims 20 to 26, wherein said user input data are transmitted to said recording device according to AV Link standard, Ethernet, WLAN or other communication channels.

29. Recording device according to any of claims 20 to 28, wherein said video signal is an analogue video signal or a digital video signal of a standard selected from the group of standards consisting of digital video broadcasting terrestrial (DVB-T), digital video broadcasting cable (DVB-C), digital video broadcasting satellite (DVB-S), and internet television standard (IP-TV).

30. Recording device according to any of claims 20 to 29, wherein said user input data comprises said recording mode.

31. Television set, comprising
an electronic program guide mechanism configured to allow selection of a program item;
a mode setting mechanism configured to allow the user to set a recording mode;
a data processor configured to determine user input information based on said program item and said recording mode; and
a sending mechanism configured to send said user input information to a recording device.

32. Television set according to claim 31, wherein said mode setting mechanism allows the user to set a priority for a selected program item.

33. Television set according to claim 31 or 32, wherein said sending mechanism operates according to the high definition multimedia interface (HDMI) standard and said user input data is sent to said recording device according to the consumer electronics control (CEC) standard.

34. System comprising
a television set, and
a recording device,
wherein said television set includes an electronic program guide mechanism configured to allow selection of a program item, a mode setting mechanism configured to allow the user to set a recording mode, a data processor configured to determine user input information based on said program item and said recording mode, and a sending mechanism configured to send said user input information to a recording device, and
wherein said recording device, includes a first receiver configured to receive user input data, a second receiver configured to receive a video signal and a data signal, said data signal comprising a content descriptor which is descriptive of a current content of said video signal, a storage configured to store at least one continuous part of said video signal, a mode register configured to store a recording mode, and a data processor, wherein, if said recording mode corresponds to a smart recording mode, segments of said video signal are determined based on said content descriptor, wherein a respective boundary of a segment is defined by a change of content, and a user desired part of said video signal is determined by comparing said user input data and said segments.
